# EUROPÄISCHE PATENTSCHRIFT

(11) **EP 1 136 745 B1**
(45) Veröffentlichungstag und Bekanntmachung des Hinweises auf die Patenterteilung: **17.05.2006**
(21) Anmeldenummer: 00123828.6
(22) Anmeldetag: 02.11.2000
(51) Int. Cl.: F16P 3/08, B04B 7/06

(54) **Verriegelung eines Verschlusses mit einem Gehäuse**
Device for latching a closure with an housing
Dispositif de verrouillage d'un organe de fermeture avec un boitier

(30) Priorität: 22.03.2000 DE 10015010
(43) Veröffentlichungstag der Anmeldung: 26.09.2001
(73) Patentinhaber: EPPENDORF AG, 22339 Hamburg (DE)
(72) Erfinder: Lippoldt, Roland, 04439 Engelsdorf (DE); Uhlendorf, Rüdiger, 37127 Dransfeld (DE); Baudisch, Hans-Dieter, 04318 Leipzig (US)
(74) Vertreter: Siemons, Norbert

(56) Entgegenhaltungen:
- EP-A- 0 154 983
- DE-A- 19 736 445
- DE-U- 29 812 603
- FR-A- 2 651 527
- FR-A- 2 683 251
- US-A- 4 984 833

## Beschreibung

Die Erfindung bezieht sich auf die Verriegelung eines Verschlusses mit einem Gehäuse einer Laborzentrifuge.

Laborzentrifugen müssen während des Betriebes sicher verschlossen sein um Unfallgefahren durch Berühren des mit hoher Geschwindigkeit drehenden Rotors oder ausschleudernden Inhalt abzuwenden. Auch bei vielen anderen Vorrichtungen, ist eine sichere Verriegelung eines Verschlusses erforderlich. Dies gilt beispielsweise für die Frontklappe einer Waschmaschine oder für den Kofferraumdeckel eines Kraftfahrzeuges.

Aus der EP 0 952 385 A2 ist ein Sicherheitsverschluß für Deckel insbesondere für Zentrifugen bekannt, bei dem mindestens ein Halteelement durch die Deckelunterseite durchgeführt ist und innerhalb des Gehäuses lösbar befestigt ist.

Das hakenförmig ausgebildete Halteelement ist mittels einer Griffleiste so zu verschwenken, daß es einen Verschlußbolzen innerhalb des Gehäuses formschlüssig teilweise umgreift. Im verschlossenen Zustand des Deckels greift ein Verriegelungsstift in eine Ausklinkung des Halteelementes formschlüssig ein, solange der Rotor sich dreht. Über ein Betätigungselement, welches abhängig von Betriebszustand über die Gerätesteuerung angesteuert wird, wird der Verriegelungsstift in die Ausklinkung ein- oder ausgefahren. Die manuelle Betätigung des Halteelementes ist kraftaufwendig und über dies steht das Halteelement permanent von der Deckelunterseite vor.

Ferner ist aus der EP 0 154 983 A2 eine Vorrichtung zum Zuhalten der Tür einer Zentrifuge bekannt, bei der an dem Zentrifugengehäuse mehrere hydraulisch oder pneumatische in eine Verriegelungs- und einer Öffnungsstellung bewegbare Hakenelemente befestigt sind, die in der Verriegelungsstellung in Aufnahmeelemente eingreifen, die an der zuzuhaltenden Tür befestigt sind. Die Aufnahmeelemente sind ebenfalls hakenförmig und stehen permanent über der Unterseite des Deckels vor. Die bewegbaren Hakenelemente sind schwenkbar auf einer gehäusefesten Achse gelagert und stehen auch bei geöffneter Tür über die Gehäuseaußenkante hinaus.

Allgemein erfordern manuell zu betätigende Verriegelungen von Deckeln oder anderen Verschlüssen einen relativ hohen Kraftaufwand beim Schließen und Abdichten des Deckels. Dabei schließen die bekannten Verriegelungen nur, wenn der Deckel in Schließposition gehalten wird, wobei ein eventuelle vorhandenes Dichtelement elastisch zusammengedrückt werden muß. Über dies haben die bekannten Verriegelungen über das Gehäuse oder über den Deckel hervorstehende Haken oder Ösen, welche die Benutzung behindern oder Unfälle verursachen können.

Davon ausgehend liegt der Erfindung die Aufgabe zugrunde, eine Verriegelung eines Verschlusses mit einem Gehäuse, einer Laborzentrifuge zu schaffen, die einen erhöhten Bedienkomfort aufweist und mit der über Deckel oder Gehäuse hervorstehende Verriegelungselemente vermieden werden können.

Die Aufgabe wird durch eine Verriegelung mit den Merkmalen des Anspruchs 1 gelöst. Vorteilhafte Ausgestaltungen der Verriegelungen sind in den Unteransprüchen angegeben.

Die erfindungsgemäße Verriegelung eines Verschlusses mit einem Gehäuse einer Laborzentrifugen hat
- einen Gehäuse,
- einen Verschluß in Form eines Deckels,
- mindestens einen um eine Drehachse in dem Gehäuse schwenkbar gelagerten Schwenkhebel mit einem vorstehenden Führungselement,
- mindestens einen Antrieb zum Schwenken des Schwenkhebels um die Drehachse, gekennzeichnet durch
- mindestens einen auf dem Schwenkhebel in einem Abstand von der Drehachse auf einer Schwenkachse gelagerten Fanghaken, der in einem radialen Abstand von der Schwenkachse ein zu dieser konzentrisches Kurvensegment aufweist, in das das Führungselement des Schwenkhebels eingreift,
- mindestens eine den Fanghaken in Schließrichtung bis zum Anliegen des Führungselements an einem ersten Endanschlag des Kurvensegmentes vorspannende Federeinrichtung und
- mindestens eine übergreifbare Schließkante des Verschlusses, so daß in Öffnungsstellung des Fanghakens und beim Schwenken des Schwenkhebels in Schließrichtung die Federeinrichtung den Fanghaken mit dem ersten Endanschlag auf dem Führungselement hält, um den Fanghaken in Schließrichtung mit dem Schwenkhebel zu schwenken, und bei einem Auftreffen des Fanghakens auf die Schließkante und weiteren Schwenken des Schwenkhebels in Schließrichtung das Führungselement sich innerhalb des Kurvensegmentes zu einem zweiten Endanschlag desselben hinbewegt, wobei der Schwenkhebel die Schwenkachse mit dem Fanghaken in Schließrichtung des Verschlusses bewegt und hierdurch der Fanghaken den Verschluß in die Schließposition zieht.

Bei dieser Verriegelung ist der Verriegelungsprozeß in zwei Abschnitte unterteilt:

Im ersten Abschnitt wird der Fanghaken mit dem Schwenkhebel verschwenkt bis er auf die Schließkante des Verschlusses trifft. Dann beginnt der zweite Abschnitt, in dem der Schwenkhebel den Fanghaken nach unten bewegt und hierdurch den Verschlusses in die Schließposition zieht. Diese Kinematik ermöglicht es, den Schwenkhebel in Öffnungsstellung vollständig das Gehäuse eingeschwenkt anzuordnen und die Schließkante an einem von der Unterseite des Verschlusses aus zugänglichen jedoch nicht hervorstehenden Element auszubilden. Gehäuse oder Verschlusses haben also keine hervorstehenden Elemente, die störend oder unfallträchtig sind. Darüber hinaus hat die Verriegelung einen hohen Bedienkomfort, da kein wesentlicher Kraftaufwand beim Schließen und Dichten des Verschlusses notwendig ist. Die Kinematik ermöglicht das Erfassen des Verschlusses, ohne das dieser vollständig geschlossen sein muß. Dabei bildet die Verriegelung eine Art kinematischen Sensor, die den Verschluß auf die Dichtung bzw. in Schließlage zieht, wenn der Fanghaken auf die Schließkante des Verschlusses trifft. Diese Bewegung des Verschlusses ist mittels des Schwenkhebels ebenfalls unter verringertem Kraftaufwand durchführbar.

Gemäß einer vorteilhaften Ausgestaltung kann der Schwenkhebel im wesentlichen kreissegmentförmig sein, wodurch insbesondere eine großflächige Auflage für den Fanghaken und Anbringungsmöglichkeiten für das Führungselement und die Schwenkachse geschaffen wird. Gemäß einer vorteilhaften Weiterbildung ist die Drehachse im inneren Winkelbereich des kreissegmentförmigen Schwenkhebels angeordnet. Eine weitere vorteilhafte Weiterbildung sieht vor, die Schwenkachse in der Nähe einer seitlichen Begrenzung des kreissegmentförmigen Schwenkhebels anzuordnen. Außerdem kann der äußere Rand des kreissegmentförmigen Schwenkhebels für die Unterbringung einer Zahnung benutzt werden, die mit einer Zahnung des Antriebes zusammenwirkt. Gemäß einer weiteren Ausgestaltung kann nämlich der Schwenkhebel auf einem kreisbogenförmig um die Drehachse verlaufenden Randbereich eine solche Zahnung aufweisen.

Gemäß eine besonders einfachen Weiterbildung ist das Führungselement ein vom Schwenkhebel hervorstehender Führungsstift. Das Führungselement kann in einem Abstand von der Drehachse zur Lagerung des Schwenkhebels angeordnet sein. Gemäß einer vorteilhaften Weiterbildung wird das Führungselement jedoch von einer Verlängerung der Drehachse zur Lagerung des Schwenkhebels gebildet.

Der Antrieb des Schwenkhebels kann grundsätzlich ein manueller Antrieb sein. Ein maximaler Bedienkomfort wird jedoch gemäß eine Ausgestaltung dadurch erreicht, daß der Antrieb elektromotorisch ist. Die Fixierung des Fanghakens in der Schließstellung kann durch eine Selbsthemmung oder eine zusätzliche Blockiereinrichtung eines Antriebsgetriebes bewirkt oder verstärkt werden. Als Blockiereinrichtung kann ein Antriebsmotor eine Schaltung aufweisen, die einen Kurzschluß des Antriebsmotors im Verriegelungsfalle ermöglicht, um dessen Selbsthemmung zu verstärken. Es kann aber auch eine mechanisch in das Antriebsgetriebe eingreifende Blockiereinrichtung vorhanden sein, die wegen der Selbsthemmung desselben verhältnismäßig einfach verwirklicht werden kann.

Gemäß einer praktischen Ausgestaltung kann der Fanghaken einen verbreiterten Fuß haben, in dem die Schwenkachse gelagert ist und der zwischen Schwenkachse und einem Hals mit dem Hakenende des Fanghakens das Kurvensegment aufweist. Zudem kann der Fanghaken zwischen Kurvensegment und Hakenende einen Befestigungspunkt für das Federeinrichtung haben. Das Federeinrichtung kann insbesondere zwischen Fanghaken und Schwenkhebel wirken. Gemäß einer vorteilhaften Weiterbildung ist es jedoch zwischen Fanghaken und einem gehäusefesten Punkt wirksam.

Der Fanghaken kann durch eine schlitzförmige Öffnung in der Gehäuseoberseite bewegbar sein, die eine Verlagerung des Fanghakens senkrecht zur Oberseite des Gehäuses und parallel dazu ermöglicht. Grundsätzlich kann die Verriegelung so angeordnet werden, daß der Fanghaken stets etwa über die Oberseite des Gehäuses hinaussteht. Besonders vorteilhaft ist jedoch eine Unterbringung, bei der der Fanghaken in Öffnungsstellung nicht über die Oberseite des Gehäuses hinaussteht.

Grundsätzlich kann die Schließkante auch an einem vorstehenden Element des Verschlusses untergebracht sein. Gemäß einer besonders vorteilhaften Weiterbildung befindet sich jedoch die Schließkante in einem bezüglich der Unterseite des Verschlusses rückspringenden Bereich desselben.

Grundsätzlich ist die Verriegelung für Verschlüsse geeignet, die in einer beliebigen Bewegung an das Gehäuse herangeführt werden. Besonders vorteilhaft ist jedoch die Verriegelung eines schwenkbar am Gehäuse gelagerten Verschlusses. Vorzugsweise wird die Verriegelung in einem Abstand vom Schwenklager des Verschlusses angebracht. In jedem Falle können eine oder mehrere Verriegelungen für den Verschluß vorhanden sein. Insbesondere bei einem schwenkbar gelagerten Verschluß kann jedoch eine einzige Verriegelung ausreichen.

Beim schwenkbar gelagerten Verschluß kann gemäß einer weiteren Ausgestaltung der Fanghaken mit seinem Hakenende in einer Schwenkstellung des Verschlusses von einigen Winkelgeraden auf die Schließkante treffen. Der Verschluß muß dann nur annähernd zugeschwenkt werden, um die Voraussetzung für eine Verriegelung zu schaffen. Wird der Verschluß weiter zugeschwenkt, ist dies unschädlich, weil dann ebenfalls gesichert ist, daß der Fanghaken auf die Schließkante trifft und hierdurch das Ziehen des Deckels in die Schließstellung eingeleitet wird.

Gemäß einer vorteilhaften Weiterbildung wird der Verschluß vom Fanghaken gegen eine Abdichtung zwischen Verschluß und Gehäuse gezogen.

Gemäß einer besonders vorteilhaften Weiterbildung kann eine Selbsthemmung des Schließmechanismus in der Schließposition dadurch erreicht werden, daß in der Schließposition die Schwenkachse über eine durch den Auflagepunkt des Hakenendes auf der Schließkante und durch das Führungselement verlaufende Gerade hinaus bewegt ist.

Schließlich kann die Vorrichtung gemäß einer vorteilhaften Weiterbildung mehrere Fanghaken aufweisen. Diese sitzen bevorzugt an voneinander beabstandeten Gehäusebereichen, um den Verschluß möglichst sicher zu verriegeln. Bevorzugt sind verschiedene Fanghaken auf verschiedenen Schwenkhebeln angeordnet, die jeweils einen eigenen Antrieb oder Antriebsmotor haben können. Die verschiedenen Schwenkhebel können aber auch mit einem gemeinsamen Antrieb verbunden sein, beispielsweise über eine Welle. Außerdem ist es möglich, mehrere Fanghaken auf verschiedene Seiten des Schwenkhebels zu setzen, um jede Schließkante zweifach zu übergreifen.

Die Erfindung wird nachfolgend anhand der anliegenden Zeichnungen näher erläutert, die ein Ausführungsbeispiel zeigen. In den Zeichnungen zeigen:
- Fig. 1: Verriegelung des Deckels einer Zentrifuge in Öffnungsposition in einem Teilschnitt durch Deckel und Gehäuse;
- Fig. 2: dieselbe Verriegelung beim Auftreffen des Fanghakens auf die Schließkante in derselben Ansicht;
- Fig. 3: dieselbe Verriegelung in Schließposition in derselben Ansicht.

Die Verriegelung ist an einer Laborzentrifuge mit einem Gehäuse 1 und einem daran schwenkbar gelagerten Deckel 2 zum Schließen einer oberseitigen Öffnung des Gehäuses 1 ausgebildet, durch die ein Zentrifugenrotor zugänglich ist. In den Zeichnungen ist lediglich ein Abschnitt von Gehäuse 1 und Deckel 2 gezeigt, der zum Schwenklager des Deckels 2 entfernt angeordnet ist.

Der Deckel 2 hat einen umlaufenden, nach unten vorstehenden Rand. Zumindest von der dem Schwenklager des Deckels 2 gegenüberliegenden Innenseite des Randes springt ein Randabschnitt 3 nach innen vor, dessen innerer Rand eine Schließkante 4 bildet.

Das Gehäuse 1 hat in seiner horizontalen Oberseite einen Schlitz 5, der sich in Querrichtung zum Schwenklager des Deckels 2 erstreckt. Der Schlitz 5 beginnt etwa auf der Höhe der Schließkante 4, wenn sich der Deckel 2 in Schließposition befindet und endet in einem weiteren Abstand von der Schließkante 4.

Innerhalb des Gehäuses 1 befinden sich etwa unterhalb des Schlitzes 5 weitere Teile der Verriegelungsmechanik, die mit der Schließkante 4 zusammenwirken und die im Folgenden näher erläutert werden:

In einer gehäusefesten Rahmenstruktur 6 ist eine Drehachse 7 quer zum Schlitz 5 gehalten. Auf dieser Drehachse 7 ist schwenkbar ein Schwenkhebel 8 gelagert, der im wesentlichen kreissegmentförmig ist. Die Drehachse 7 befindet sich im inneren Winkelbereich des kreissegmentförmigen Schwenkhebels. Zudem steht die Drehachse 7 über die gezeigte Seite des Schwenkhebels 8 mit einem Abschnitt vor, der einen Führungsstift 9 bildet. Ferner ist der im wesentlichen kreisbogenförmige Rand des Schwenkhebels 8 mit einer Zahnung 10 versehen.

Auf derselben Seite des Schwenkhebels 8, auf dem der Führungsstift 9 vorsteht, trägt der Schwenkhebel 8 eine vorstehende Schwenkachse 11. Diese befindet sich an der Begrenzung des Schwenkhebels 8, die sich auf der in der Zeichnung linke Seite desselben befindet. Die Schwenkachse 11 ist in einem Abstand von der Drehachse 7 in der Nähe der Zahnung 10 angeordnet.

Auf der Schwenkachse 11 ist ein Fanghaken 12 mit einem Fuß 13 gelagert, der ebenfalls im wesentlichen kreissegmentförmig ist. Dabei befindet sich die Schwenkachse 11 im inneren Winkelbereich des Fußes 13. Nahe dem äußeren Rand des Fußes 13 weist der Fanghaken 12 ein zur Schwenkachse 11 konzentrisches Kurvensegment 14 auf, in das der Führungsstift 9 eingreift.

Ferner hat der Fanghaken 12 einen vom Fuß 13 ausgehende Hals, der ein Hakenende 15 trägt. Der Fanghaken 12 ist in einer durch den Schlitz 5 verlaufenden Vertikalebene bewegbar, wobei er insbesondere mit dem Hakenende 15 in den Schlitz 5 eingreifen bzw. den Schlitz 5 durchgreifen kann.

An der in der Zeichnung linken Seite weist der Fanghaken 12 ein Lagerauge 16 auf, an dem eine Federeinrichtung in Form einer Schraubenfeder 17 gelagert ist. Die Schraubenfeder 17 ist mit dem anderen Ende an einer Lagerstelle 18 der gehäusefesten Rahmenstruktur 6 gehalten. Die Anordnung des Federeinrichtung 17 ist so, daß es sich in jeder Stellung der Verriegelungsmechanik oberhalb des Schwenklagers 11 befindet, so daß es stets den Fanghaken 12 in Gegenuhrzeigersinn in eine Stellung zu ziehen sucht, in der der Führungsstift 9 gegen den in der Zeichnung rechten, ersten Endanschlag der 14'der Führungskurve 14 trifft.

Schließlich weist die Verriegelungsmechanik einen elektrischen Antriebsmotor 19 auf, der ebenfalls gehäusefest gelagert ist und der ein drehbares Antriebszahnrad 20 aufweist, dessen Zahnung mit der Zahnung 10 des Schwenkhebels 8 kämmt.

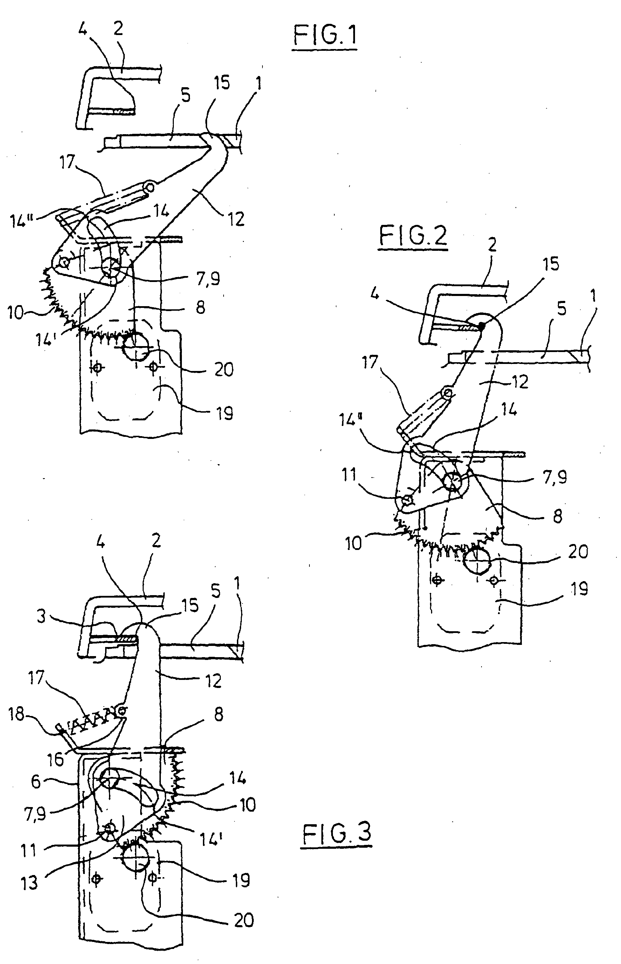

Die Verriegelung funktioniert folgendermaßen:
In den in Fig. 1 gezeigten Öffnungsstellung hat der Antriebsmotor 19 den Schwenkhebel 8 um die Drehachse 7 im Uhrzeigersinn bis zum Erreichen einer Endstellung geschwenkt, in der das Zahnrad 20 etwa das eine Ende der Zahnung 10 erreicht hat. In dieser Lage zieht die vorgespannte Schraubenfeder 17 den Fanghaken 12 in Gegenuhrzeigersinn, so daß der Führungsstift 9 am ersten Endanschlag 14 des Kurvensegmentes 14' anliegt.

Für das Schließen des Deckels 2 wird dieser zunächst manuell zum Gehäuse 1 geschwenkt, bis er in eine Winkellage von etwa 5° zum Gehäuse 1 gelangt, die in der Fig. 1 gezeigt ist.

Für das Verriegeln des Deckels 2 treibt der Antriebsmotor 19 den Schwenkhebel 8 um die Drehachse 7 im Gegenuhrzeigersinn um die Drehachse 7 an. Die Schraubenfeder 17 bewirkt, daß dabei weiterhin der Fanghaken 12 mit ersten Endanschlag 14' am Führungsstift 9 anliegt. Folglich wird der Fanghaken 12 um die Drehachse 7 mit verschwenkt, wobei sein Hakenende 15 aus der Oberseite des Schlitzes 5 austritt. Der Fanghaken 12 wird mitverschwenkt, bis sein Hakenende 15 auf die Schließkante 4 des Deckels 2 trifft, wie in der Fig. 2 gezeigt.

Sobald der Fanghaken 12 auf die Schließkante 4 trifft, wird diese zum neuen Drehpunkt des Fanghakens 12. Beim Weiterschwenken des Schwenkhebels 8 im Gegenuhrzeigersinn wird folglich der Fanghaken 12 an der Schwenkachse 11 nach unten gezogen und der Führungsstift 9 im Kurvensegment 14 auf den in der Zeichnung linken, zweiten Endanschlag 14" zu bewegt. Durch die Bewegung des Fanghakens 12 nach unten wird über die Schließkante 4 der Deckel 2 gegen die Oberseite des Gehäuses 1 gezogen und damit geschlossen. Die Schließbewegung endet, wenn das Zahnrad 20 etwa an dem im Uhrzeigersinn äußersten Ende der Zahnung 10 angelangt. Dann ist das Schwenklager 11 über die Verlängerung einer Geraden durch die Schließkante 4 und den Führungsstift 9 hinausgeschwenkt, wodurch sich ein selbsthemmender Effekt ergibt. Dabei liegt vorzugsweise der Führungsstift 9 am zweiten Endanschlag 14" des Kurvensegments 14 an. Grundsätzlich ist es aber auch möglich, daß der Führungsstift 9 in Schließstellung den zweiten Endanschlag 14" nicht erreicht.

Ein weiterer Beitrag zur Selbsthemmung wird durch das Antriebsgetriebe erreicht. Ferner wird zur Sicherung des Fanghebels 12 in der Schließstellung gemäß Fig. 3 der elektrische Antriebsmotor 19 kurzgeschlossen.

Zur Entriegelung des Deckels 2 wird der Antriebsmotor 19 in umgekehrter Richtung betrieben, so daß der zuvor geschilderte Ablauf in umgekehrter Richtung erfolgt.

## Patentansprüche

1. Verriegelung eines Verschlusses (2) mit einem Gehäuse (1) einer Laborzentrifuge mit
- einem Gehäuse (1),
- einem Verschluß (2) in Form eines Deckels,
- mindestens einem um eine Drehachse (7) in dem Gehäuse (1) schwenkbar gelagerten Schwenkhebel (8) mit einem vorstehenden Führungselement (9),
- mindestens einem Antrieb (19) zum Schwenken des Schwenkhebels (8) um die Drehachse (7), **gekennzeichnet durch**
- mindestens einem auf dem Schwenkhebel (8) in einem Abstand von der Drehachse (7) auf einer Schwenkachse (11) gelagerten Fanghaken (12), der in einem radialen Abstand von der Schwenkachse (11) ein zu dieser konzentrisches Kurvensegment (14) aufweist, in das das Führungselement (9) des Schwenkhebels (8) eingreift,
- mindestens einer den Fanghaken (12) in Schließrichtung bis zum Anliegen des Führungselements (9) an einem ersten Endanschlag (14') des Kurvensegmentes (14) vorspannenden Federeinrichtung (17) und
- mindestens einer übergreifbaren Schließkante (4) des Verschlusses (2), so daß in Öffnungsstellung des Fanghakens (12) und beim Schwenken des Schwenkhebels (8) in Schließrichtung die Federeinrichtung (17) den Fanghaken (12) mit dem ersten Endanschlag (14') auf dem Führungselement (9) hält, um den Fanghaken in Schließrichtung mit dem Schwenkhebel (8) zu schwenken, und bei einem Auftreffen des Fanghakens (12) auf die Schließkante (4) und weiteren Schwenken des Schwenkhebels (8) in Schließrichtung das Führungselement (9) sich innerhalb des Kurvensegments (14) zu einem zweiten Endanschlag (14") desselben hinbewegt, wobei der Schwenkhebel (8) die Schwenkachse (11) mit dem Fanghaken (12) in Schließrichtung des Verschlusses (2) bewegt und hierdurch der Fanghaken (12) den Verschluß (2) in Schließposition zieht.

2. Verriegelung nach Anspruch 1, bei der der Schwenkhebel (8) im wesentlichen kreissegmentförmig ist.

3. Verriegelung nach Anspruch 2, bei der die Drehachse (7) im inneren Winkelbereich des kreissegmentförmigen Schwenkhebels (8) angeordnet und/oder bei der die Schwenkachse (11) in der Nähe einer seitlichen Begrenzung des kreissegmentförmigen Schwenkhebels (8) angeordnet ist.

4. Verriegelung nach einem der Ansprüche 1 bis 3, bei der der Schwenkhebel (8) auf einem kreisbogenförmig um die Drehachse verlaufenden Randbereich eine Zahnung (10) hat, die mit einer Zahnung (20) des Antriebes (19) zusammenwirkt, um den Schwenkhebel (8) um die Drehachse (7) zu schwenken.

5. Verriegelung nach einem der Ansprüche 1 bis 4, bei der das Führungselement ein Führungsstift (9) ist.

6. Verriegelung nach einem der Ansprüche 1 bis 5, bei der das Führungselement (9) von einer Verlängerung der Drehachse (7) zur Lagerung des Schwenkhebels (8) gebildet ist.

7. Verriegelung nach einem der Ansprüche 1 bis 6, bei der der Antrieb (19) elektromotorisch ist.

8. Verriegelung nach dem Ansprüch 7, bei der eine Schaltung zur Unterstützung der Selbsthemmung durch Kurzschließen des elektromotorischen Antriebs (19) in Verriegelungsposition vorhanden ist.

9. Verriegelung nach einem der Ansprüche 1 bis 8, bei der der Fanghaken (12) einen verbreiterten Fuß (13) hat, in dem die Schwenkachse (11) gelagert ist und der zwischen Schwenkachse und einem angrenzenden Hals mit einem Hakenende (15) das Kurvensegment (14) aufweist.

10. Verriegelung nach einem der Ansprüche 1 bis 9, bei der der Fanghaken (12) zwischen Kurvensegment (14) und Hakenende (15) am Hals einen Befestigungspunkt (16) für das Federeinrichtung (17) aufweist.

11. Verriegelung nach einem der Ansprüche 1 bis 10, bei der das Federeinrichtung (17) anderen Endes am Gehäuse (1) festgehalten ist.

12. Verriegelung nach einem der Ansprüche 1 bis 11, bei der der Fanghaken (12) durch eine schlitzförmige Öffnung (5) in der Oberseite des Gehäuses (1) bewegbar ist, die eine Verlagerung des Fanghakens (12) senkrecht zur Oberseite des Gehäuses (1) und parallel dazu ermöglicht.

13. Verriegelung nach einem der Ansprüche 1 bis 12, bei der der Fanghaken (12) in Öffnungsstellung im wesentlichen nicht über die Oberseite des Gehäuses (19) hinaus steht.

14. Verriegelung nach einem der Ansprüche 1 bis 3, bei der die Schließkante (4) in einem bezüglich der Unterseite des Verschlusses rückspringenden Bereichs desselben mit darüber befindlichen Hohlraum ausgebildet ist.

15. Verriegelung nach einem der Ansprüche 1 bis 14, bei der der Verschluß (2) schwenkbar am Gehäuse (1) gelagert ist.

16. Verriegelung nach Anspruch 15, bei der Fanghaken (12) mit seinem Hakenende (15) bei einer Schwenkstellung des Verschlusses (2) von wenigen Winkelgraden auf die Schließkante (4) trifft.

17. Verriegelung nach einem der Ansprüche 1 bis 16, bei der der Verschluß (2) vom Fanghaken (12) gegen eine Abdichtung des Gehäuses (1) abdichtend ziehbar ist.

18. Verriegelung nach einem der Ansprüche 1 bis 17, bei der in Schließposition die Schwenkachse (11) über eine Gerade durch den Auflagepunkt des Hakenendes (15) auf der Schließkante (4) und durch das Führungselement (9) hinausbewegt ist, um eine Selbsthemmung zu bewirken.

19. Verriegelung nach einem der Ansprüche 1 bis 18, die mehrere Fanghaken (12) aufweist.

## Claims

1. A device for latching a closure (2) with a housing (1) of a laboratory centrifuge, comprising
- a housing (1),
- a closure (2) in the form of a cover,
- at least one swiveling lever (8) pivotally supported about an axis of rotation (7) in the housing (1) including a projecting guide element (9),
- at least one drive (19) to pivot the swiveling lever (8) about the axis of rotation (7), **characterized in that** there are provided
- at least one catch hook (12) supported on the swiveling lever (8) at a spacing from the axis of rotation (7) on a pivot axis (11) which, at a radial spacing from the pivot axis (11), has a cam segment (14) concentric thereto, into which the guide element (9) of the swiveling lever (8) engages,
- at least one spring means (17) biasing the catch hook (12) in the closing direction until the guide element (9) bears against a first final stop (14') of the cam segment (14), and
- at least one closing edge (4) of the closure (2) adapted to be gripped over on the closure so that if the catch hook (12) is in an opening position and the swiveling lever (8) is pivoted in the closing direction the spring means (17) holds the catch hook (12) with the first final stop (14') on the guide element (9) in order to pivot the catch hook with the swiveling lever (8) in the closing direction and, if the catch hook (12) impinges on the closing edge (4) and the swiveling lever (8) continues to be pivoted in the closing direction the guide element (9) will move, within the cam segment (14), to a second final stop (14") thereof, wherein the swiveling lever (8) moves the pivot axis (11) with the catch hook (12) in the closing direction of the closure (2) and, thus, the catch hook (12) pulls the closure (2) into the closing position.

2. The device for latching according to claim 1 wherein the swiveling lever (8) substantially is of a circle segment shape.

3. The device for latching cording to claim 2 wherein the axis of rotation (7) is disposed in the inner angular range of the circle segment shaped swiveling lever (8) and/or wherein the pivot axis (11) is disposed in the vicinity of a lateral limitation of the circle segment shaped swiveling lever (8).

4. The device for latching according to any one of claims 1 to 3 wherein the swiveling lever (8), on a marginal area extending around the axis of rotation in a circle arc shape, has a series of teeth (10) which interacts with a series of teeth (20) of the drive (19) in order to pivot the swiveling lever (8) about the axis of rotation (7).

5. The device for latching according to any one of claims 1 to 4 wherein the guide element is a guide pin (9).

6. The device for latching according to any one of claims 1 to 5 wherein the guide element (9) is defined by a prolongation of the axis of rotation (7) for supporting the swiveling lever (8).

7. The device for latching according to any one of claims 1 to 6 wherein the drive (19) is by an electric motor.

8. The device for latching according to claim 7 wherein a circuit exists which enhances the self-locking action by shortcircuiting the electric motor drive (19) in the locking position.

9. The device for latching according to any one of claims 1 to 8 wherein the catch lever (12) has a widened base (13) in which the pivot axis (11) is supported and which, between the pivot axis and an adjoining neck with the hooked end (15), includes the cam segment (14).

10. The device for latching according to any one of claims 1 to 9 wherein the catch lever (12) has a fixing point (16) for the spring means (17) on the neck between the cam segment (14) and the hooked end (15).

11. The device for latching according to any one of claims 1 to 10 wherein the spring means (17) is held on the housing (1) at the other end.

12. The device for latching according to any one of claims 1 to 11 wherein the catch hook (12) is adapted to be moved through a slot-shaped aperture (5) in the upper side of the housing (1) which enables the catch hook (12) to be displaced perpendicular to the upper side of the housing (1) and parallel thereto.

13. The device for latching according to any one of claims 1 to 12 wherein the catch hook (12), in the aperture position, does not substantially project beyond the upper side of the housing (19).

14. The device for latching according to any one of claims 1 to 3 wherein the closing edge (4) is formed in a region thereof which stands back with respect to the underside of the closure with a cavity existing thereabove.

15. The device for latching according to any one of claims 1 to 14 wherein the closure (2) is pivotally supported on the housing (1).

16. The device for latching according to claim 15 wherein the catch hook (12) impinges its hooked end (15) on the closing edge (4) in a pivoted position of the closure (2) which is merely a few angular degrees.

17. The device for latching according to any one of claims 1 to 16 wherein the closure (2) is adapted to be sealingly pulled by the catch hook (12) against a seal of the housing (1).

18. The device for latching according to any one of claims 1 to 17 wherein the pivot axis (11), in the closing position, has been moved beyond a straight line extending through the point of rest of the hooked end (15) on the closing edge (4) and through the guide element (9) to cause a self-locking action.

19. The device for latching according to any one of claims 1 to 18 which has several catch hooks (12).

## Revendications

1. Dispositif de verrouillage d'un organe de fermeture (2) avec un boîtier (1) d'une centrifugeuse de laboratoire avec
- un boîtier (1),
- un organe de fermeture (2) en forme de couvercle,
- au moins un levier pivotant (8) logé dans le boîtier (1) de manière pivotante autour d'un axe de rotation (7), avec un élément de guidage (9) saillant, - au moins un entraînement (19) pour pivoter le levier pivotant (8) autour de l'axe de rotation (7),
**caractérisé par**
- au moins un crochet d'arrêt (12) logé sur un axe de pivotement (11) distant de l'axe de rotation (7) sur le levier pivotant (8), ledit crochet comportant à une distance radiale de l'axe de pivotement (11) un segment de courbe (14) concentrique par rapport audit axe, segment dans lequel engrène l'élément de guidage (9) du levier pivotant (8),
- au moins un dispositif à ressort (17) qui précontraint le crochet d'arrêt (12) dans le sens de fermeture jusqu'à l'appui de l'élément de guidage (9) contre une première butée de fin de course (14') du segment de courbe (14) et
- au moins une arête de fermeture (4) de l'organe de fermeture (2) pouvant être recouverte de sorte qu'en position d'ouverture du crochet d'arrêt (12) et lors du pivotement du levier pivotant (8) dans le sens de fermeture, le dispositif à ressort (17) retient le crochet d'arrêt (12) avec la première butée de fin de course (14') sur l'élément de guidage (9) pour pivoter le crochet d'arrêt dans le sens de fermeture avec le levier pivotant (8), et lors de l'entrée en contact du crochet d'arrêt (12) avec l'arête de fermeture (4) et de la poursuite du pivotement du levier pivotant (8) dans le sens de fermeture l'élément de guidage (9) se déplace à l'intérieur du segment de courbe (14) en direction d'une seconde butée de fin de course (14'') de ce même segment, sachant que le levier pivotant (8) déplace l'axe de pivotement (11) avec le crochet d'arrêt (12) dans le sens de fermeture de l'organe de fermeture (2) et de ce fait le crochet d'arrêt (12) tire l'organe de fermeture (2) en position de fermeture.

2. Dispositif de verrouillage selon la revendication 1, dans lequel le levier pivotant (8) a essentiellement une forme de segment de cercle.

3. Dispositif de verrouillage selon la revendication 2, dans lequel l'axe de rotation (7) est disposé dans la zone angulaire interne du levier pivotant (8) en forme de segment de cercle et/ou dans lequel l'axe de pivotement (11) est disposé à proximité d'une délimitation latérale du levier pivotant (8) en forme de segment de cercle.

4. Dispositif de verrouillage selon l'une des revendications 1 à 3, dans lequel le levier pivotant (8) a une denture (10) sur une zone marginale formant un arc de cercle autour de l'axe de rotation, ladite denture concourant avec une denture (20) de l'entraînement (19) pour pivoter le levier pivotant (8) autour de l'axe de rotation (7).

5. Dispositif de verrouillage selon l'une des revendications 1 à 4, dans lequel l'élément de guidage est une goupille de guidage (9).

6. Dispositif de verrouillage selon l'une des revendications 1 à 5, dans lequel l'élément de guidage (9) est formé par un prolongement de l'axe de rotation (7) pour loger le levier pivotant (8).

7. Dispositif de verrouillage selon l'une des revendications 1 à 6, dans lequel l'entraînement (19) est électromoteur.

8. Dispositif de verrouillage selon la revendication 7, dans lequel un circuit est prévu pour soutenir l'arrêt automatique par court-circuit de l'entraînement électromoteur (19) en position de verrouillage.

9. Dispositif de verrouillage selon l'une des revendications 1 à 8, dans lequel le crochet d'arrêt (12) a un pied élargi (13) dans lequel est logé l'axe de pivotement (11) et lequel, entre axe de pivotement et un collet adjacent avec une extrémité de crochet (15), comporte le segment de courbe (14).

10. Dispositif de verrouillage selon l'une des revendications 1 à 9, dans lequel le crochet d'arrêt (12) comporte au niveau du collet, entre segment de courbe (14) et extrémité de crochet (15), un point de fixation (16) pour le dispositif à ressort (17).

11. Dispositif de verrouillage selon l'une des revendications 1 à 10, dans lequel le dispositif à ressort (17) est fixé à l'autre extrémité du boîtier (1).

12. Dispositif de verrouillage selon l'une des revendications 1 à 11, dans lequel le crochet d'arrêt (12) est mobile dans une ouverture (5) en forme de fente (5) située sur la face supérieure du boîtier (1), ladite ouverture permettant au crochet d'arrêt (12) de se déplacer perpendiculairement à la face supérieure du boîtier (1) et parallèlement à celle-ci.

13. Dispositif de verrouillage selon l'une des revendications 1 à 12, dans lequel globalement le crochet d'arrêt (12) en position d'ouverture ne dépasse pas de la face supérieure du boîtier (19).

14. Dispositif de verrouillage selon l'une des revendications 1 à 3, dans lequel l'arête de fermeture (4) est formée dans une zone de l'organe de fermeture avec un espace vide se trouvant dessus, ladite zone étant en retrait par rapport à la face inférieure dudit organe de fermeture.

15. Dispositif de verrouillage selon l'une des revendications 1 à 14, dans lequel l'organe de fermeture (2) est logé de manière pivotante sur le boîtier (1).

16. Dispositif de verrouillage selon la revendication 15, dans lequel le crochet d'arrêt (12) avec son extrémité de crochet (15) entre en contact avec l'arête de fermeture (4) lorsque l'organe de fermeture (2) pivote de quelques degrés.

17. Dispositif de verrouillage selon l'une des revendications 1 à 16, dans lequel l'organe de fermeture (2) peut être tiré, réalisant ainsi un étanchement, par le crochet d'arrêt (12) contre un joint du boîtier (1).

18. Dispositif de verrouillage selon l'une des revendications 1 à 17, dans lequel en position de fermeture l'axe de pivotement (11) sort en suivant une droite qui passe par le point d'appui de l'extrémité du crochet (15) sur l'arête de fermeture (4) et par l'élément de guidage (9) afin de provoquer un arrêt automatique.

19. Dispositif de verrouillage selon l'une des revendications 1 à 18, lequel comporte plusieurs crochets d'arrêt (12).
